# EUROPEAN PATENT APPLICATION

(11) **EP 1 375 438 A2**
(43) Date of publication of application: **02.01.2004**
(21) Application number: 03012943.1
(22) Date of filing: 06.06.2003
(51) Int. Cl.: C02F 9/00, B09C 1/00

(54) **Process for decomposing a substance collected from polluted soil and apparatus therefor**

(30) Priority: 14.06.2002 JP 2002174901
(71) Applicant: CANON KABUSHIKI KAISHA, Ohta-ku, Tokyo (JP)
(72) Inventor: Kato, Kinya, Ohta-ku, Tokyo (JP)
(74) Representative: Weser, Wolfgang, Dr. Dipl.-Phys.

(57) **Abstract**

A process and an apparatus are provided for conducting decontaminating efficiently polluted soil in plural areas. The process comprises steps of decomposing a decomposition-object collected from a first site (Sᵢ₋₁), interrupting the decomposing step, transporting the decomposition-object remaining to be decomposed after the interrupting step to a second site (Sᵢ), and decomposing the transported decomposition-object together with a decomposition-object collected from the second site (Sᵢ₊₁), wherein the first decomposition-object collected from the first site (Sᵢ₋₁) and the second decomposition-object collected from the second site (Sᵢ) are the same substance. The apparatus for decomposing a decomposition-object comprises a receiving means for receiving an undecomposed decomposition-object transported from a first site (Sᵢ₋₁) to a second site (Sᵢ), and a decomposing means for decomposing, in the second site (Sᵢ), the transported decomposition-object together with a decomposition-object collected from the second site (Sᵢ), wherein the transported decomposition-object and the decomposition-object collected from the second site (Sᵢ) are the same substance.

## Description

### BACKGROUND OF THE INVENTION

### Field of the Invention

The present invention relates to a process for decomposing a decomposition-object, and to an apparatus for the process.

### Related Background Art

With progress of industrial technology until recent years, organic chlorine compounds (e.g., chlorinated ethylene compounds, and chlorinated methane compounds) have come to be used in a huge amount, and disposal thereof are causing serious problems. Further, these gaseous substances after use are causing pollution of natural environment and other environmental problems. Great efforts are being paid to solve the problems.

For treating the organic chlorine compounds, photodecomposition has been tried and disclosed which decomposes the compound by UV irradiation in a gas phase. For example, a process is disclosed in which an exhaust gas containing an organic halogen compound is irradiated with UV light to change the gas into an acidic gaseous decomposition product and is washed with an alkali for detoxification (Japanese Patent Application Laid-Open No. 62-191025). An apparatus therefor is disclosed in which waste water containing an organic halogen compound is aerated and the discharged gas is irradiated with UV light and washed with an alkali (Japanese Patent Application Laid-Open No. 62-191095).

Another apparatus is disclosed in which a gaseous organic chlorine compound to be decomposed is mixed with a chlorine-containing gas and the mixture is irradiated with light to decompose and detoxify the gaseous organic chlorine compound.

### SUMMARY OF THE INVENTION

The aforementioned reaction of decomposition of the gaseous organic chlorine compound generates a decomposition product which may cause secondary pollution if emitted into environment without treatment. Considering that the decomposition product should be detoxified effectively, the inventors of the present invention, after comprehensive study, have completed the present invention.

The present invention intends to decontaminate polluted soil, and provides a process and apparatus for treating effectively a decomposition-object like the above decomposition product. The present invention provides also a process and an apparatus for decontaminating polluted soils collected from plural areas.

The process for decomposing a decomposition-object of the present invention comprises steps of decomposing a decomposition-object collected from a first area, interrupting the decomposing step, transporting to a second area the decomposition-object remaining to be decomposed after interrupting step, and decomposing the transported decomposition-object together with decomposition-object collected from the second area to be decomposed, wherein the first decomposition-object collected from the first area and the second decomposition-object collected from the second area are the same substance.

The apparatus for decomposing the decomposition-object of the present invention comprises a receiving means for receiving an undecomposed decomposition-object transported from a first area to a second area and a decomposing means for decomposing in the second area the transported decomposition-object together with a decomposition-object collected from the second area, wherein the transported decomposition-object and the decomposition-object collected from the second area are the same substance.

### BRIEF DESCRIPTION OF THE DRAWINGS

Fig. 1 illustrates schematically an embodiment of the present invention.
Fig. 2 illustrates an example of the apparatus for decomposition treatment employed in the present invention.

### DESCRIPTION OF THE PREFERRED EMBODIMENTS

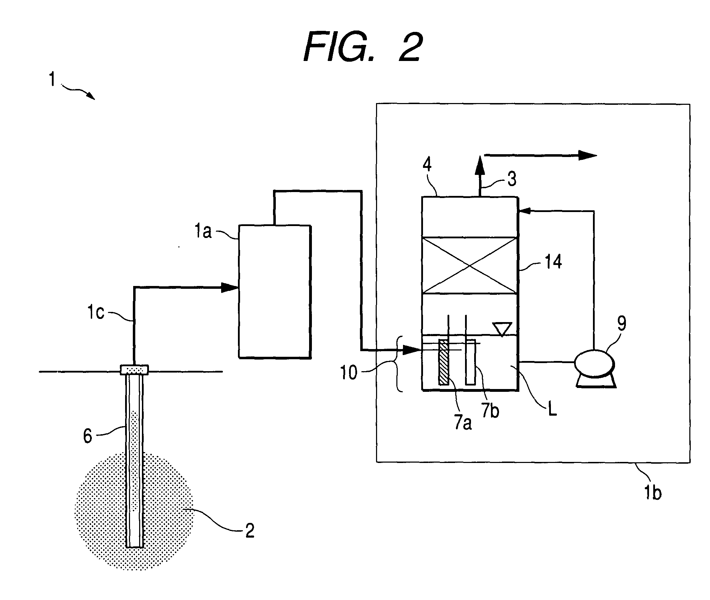

The basic constitution of the decomposition-treatment apparatus of the present invention is explained by reference to Fig. 2. Fig. 2 illustrates decomposition-treatment apparatus 1 for decomposing a pollutant in soil such as organic chlorine compounds like trichloroethylene. The apparatus comprises main decomposition-treatment unit 1a, secondary decomposition-treatment unit 1b, and pollutant-feeding means 1c. Pollutant-feeding means 1c comprises a pipeline and a sucking device for sucking the pollutant from the polluted soil 5 through sucking well 6 placed in the soil and feeding the pollutant to main decomposition-treatment unit 1a. Numeral 2 indicates schematically a pollutant gathered by suction by sucking well 6. Main decomposition-treatment unit 1a conducts primary decomposition treatment step involving a primary decomposition reaction as a basic decomposition reaction of the pollutant to form a decomposition product. (Hereinafter the decomposition product produced by the primary decomposition-treatment step is referred to as "primary decomposition product".) An example of the primary decomposition reaction is decomposition of pollutant gas by irradiation of light in a chlorine atmosphere. For example, to main decomposition-treatment unit 1a comprised of a reaction vessel provided with a light-irradiating means, chlorine is fed from a chlorine cylinder to generate chlorine gas-containing air. The light irradiating means in this example may be a black-light fluorescence lamp not containing light with wavelength of 300 nm or shorter. In the case where light with wavelength of 254 nm is employed for the decomposition, the device for producing the chlorine gas-containing air may be omitted. An example of the primary decomposition product is a halogenated acetic acid produced by decomposition of trichloroethylene or the like, such as chloroacetic acid, dichloroacetic acid, and trichloroacetic acid.

The primary decomposition product is discharged to secondary decomposition-treatment unit 1b which is comprised of an absorbing means for an absorption step to trap the primary decomposition product and a decomposing means for decomposing the primary : decomposition product. Secondary decomposition-treatment unit 1b conducts a secondary decomposition-treatment step comprising an absorption step and a secondary decomposition reaction to decompose the primary decomposition product. (Hereinafter the decomposition product produced by the second decomposition-treatment step is referred to as a "secondary decomposition product".)

The mode of the secondary decomposition-treatment step is not specially limited. In the second decomposition-treatment step, in most cases, the primary decomposition product is derived in a state of a gas or a mist of a gas-liquid dispersion. (Hereinafter, the gas or the dispersion containing the primary decomposition product derived from main decomposition-treatment unit 1a is referred to as a "primary decomposition product-containing gas".) Therefore, the absorbing means has usually constitution to absorb the gas by contact of the gas with a liquid. Fig. 2 shows, as an example of the absorbing means, gas-liquid contact tower 4 (hereinafter referred to as a "scrubber") having packed bed 14. The bottom of the scrubber constitutes a reservoir serving as the decomposing means. The liquid phase after contact with the primary decomposition product is accumulated in the reservoir, and the primary decomposition product absorbed is decomposed there. The second decomposition-treatment step is explained below taking the scrubber as an example of the absorbing-decomposing means.

The primary decomposition product-containing gas in a state of a gas or mist which contains the primary decomposition product from main decomposition-treatment unit 1a is introduced to scrubber 4. The liquid phase in the scrubber is circulated by pump 9, and is allowed to flow down from the upper part of the scrubber. The primary decomposition product-containing gas introduced into the scrubber is brought into contact with the downflowing liquid phase mainly on the surface of the packing of packed bed 14, whereby the primary decomposition product is transferred to the liquid phase. The liquid containing the absorbed primary decomposition product (hereinafter referred to as a "treatment liquid") flows down by gravity and is stored in the reservoir 10 at the bottom of scrubber 4 as shown by the symbol L in Fig. 2. The liquid phase is pumped up to the upper part of scrubber 4 by pump 9, and allowed to flow down again through the packed bed to contact with the primary decomposition product-containing gas. With such circulation of the treatment liquid, the concentration of the primary decomposition product increases in the treatment liquid.

In the case where chlorine is contained in the primary decomposition product-containing gas after the primary decomposition treatment of the pollutant, most portion of the chlorine is discharged from discharge outlet 3 at the top of scrubber 4 to a separate treatment process (not shown in the drawing) without remaining in the treatment liquid, after contact of the chlorine-containing phase with the treatment liquid in packed bed 14, since the treatment liquid is also acidic. The separate treatment process includes absorption of the chlorine with an alkaline solution, and adsorption by active carbon.

The primary decomposition product trapped by the absorbing means is subjected to a secondary decomposition reaction by a decomposition means. For effective processing in the secondary decomposition-treatment step, the secondary decomposition reaction is preferably conducted at a high concentration of the primary decomposition product in secondary decomposition-treatment unit 1b. At the higher concentration, the decomposition reaction will proceed at a higher probability in a shorter time. For example, in conducting the secondary decomposition reaction by electrolysis, decomposing electrodes 7a, 7b are used for the reaction. In this case, the amount of the decomposition in a unit time at a constant electric current quantity depends on the concentration of the solution. That is, the higher the concentration of the treatment liquid, the larger is the decomposition rate of the primary decomposition product in a unit time. For increasing the concentration of the primary decomposition product in secondary decomposition-treatment unit 1b, the treatment liquid is circulated to repeat the absorption step, as mentioned above. Further, for conducting the secondary decomposition-treatment step steadily as a whole, the absorption step and the secondary decomposition reaction are controlled to keep the concentration of the primary decomposition product in secondary decomposition-treatment unit 1b by adjusting the amount of absorption of the primary decomposition product in the secondary decomposition-treatment unit 1b to be nearly equal to the amount of decomposition of the primary decomposition product decomposed in decomposition-treatment unit 1b. This control is explained below by taking a secondary decomposition reaction in the secondary decomposition-treatment step by electrolysis in the scrubber.

As described above, the amount of the primary decomposition product decomposable in a unit time is larger at the higher concentration of the primary decomposition product in the treatment liquid if the electric current quantity is constant. With increase of the primary decomposition product in the treatment liquid, whereby the amount of the decomposition increases, the concentration of the primary decomposition product in the treatment liquid decreases. Thereby, the amount of the decomposition by electrolysis also decreases. However, an untreated primary decomposition product is newly fed, whereby the concentration of the primary decomposition product in the treatment liquid is increased, not being kept at a lower level. As the result, the amount of decomposition in a unit time is increased to decrease again the concentration of the primary decomposition product in the treatment liquid. The concentration of the primary decomposition product in the treatment liquid reaches a certain amount and keeps the certain amount, increasing and decreasing repeatedly as above described. In such a manner, the primary decomposition product is decomposed by the decomposing means in the amount equal to the primary decomposition product fed to scrubber 4 in a unit time. The certain amount of the concentration is kept higher at a less electric current in comparison with a case of a higher electric current level. Thus the apparatus is driven in high efficiency.

Finally when polluted soil 5 has been decontaminated satisfactorily and the feed of the pollutant has ceased not to produce the primary decomposition product, treatment liquid L which contains an undecomposed primary-decomposition product at a high concentration remains in reservoir 10 of secondary decomposition-treatment unit 1b.

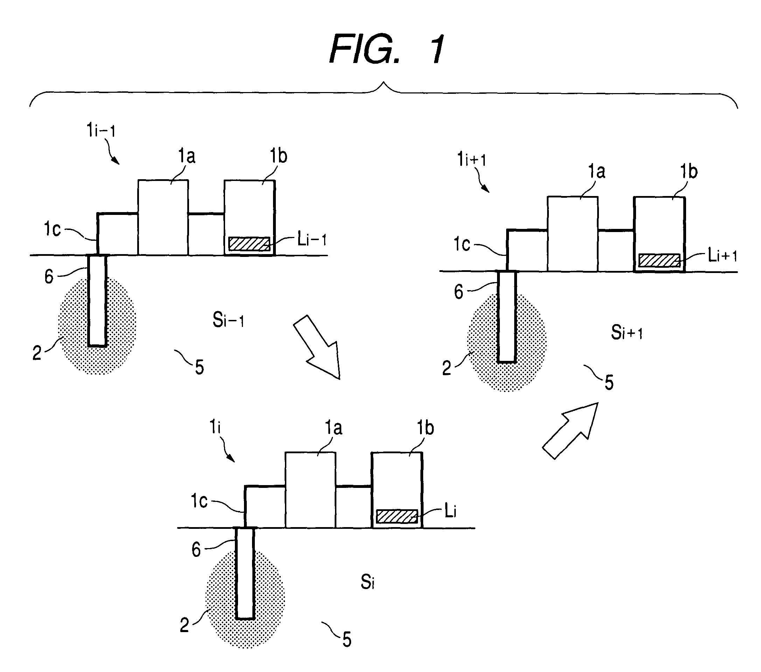

Next, a basic constitution of an embodiment of the process and apparatus for decontaminating effectively polluted soils of plural areas of the present invention is explained by reference to Fig. 1.

In Fig. 1, the symbols Sᵢ₋₁, Sᵢ, and Sᵢ₊₁ indicate respectively a site having polluted soil 5, and the bold blank arrows indicate the order of the decontamination operation. Naturally the number of the sites may be varied depending on the circumstances. In the respective sites, the decomposition treatment apparatuses 1ᵢ₋₁, 1ᵢ, and 1ᵢ₊₁ are installed. The decomposition treatment apparatuses respectively comprise main decomposition-treatment unit 1a, secondary decomposition-treatment unit 1b, and pollutant-feeding means 1c. The same symbols are used as in Fig. 2.

The soil of site Sᵢ₋₁ is decontaminated in a manner described above by reference to Fig. 2. Then in next site Sᵢ, the same treatment is started. For treating the product efficiently in a short time, treatment liquid Lᵢ₋₁ remaining in the reservoir of secondary decomposition treatment unit 1b of decomposition treatment apparatus 1ᵢ₋₁ is taken out after completion of the decontamination at site Sᵢ₋₁. This taking-out operation is explained by taking as an example the scrubber as secondary decomposition treatment unit 1b. In one method of the taking-out operation, a valve is provided at the bottom of the scrubber, and the treatment liquid Lᵢ₋₁ is discharged by opening the valve and is transferred into a plastic tank. In another method, a pipe branching from pump 9 is provided additionally, and the liquid is discharged through this pipe into a plastic tank. The decomposing means of the next decomposition-treatment apparatus may be provided with an openable hatch for introducing the stored liquid transported from the preceding site. In still another method, the decomposing means of the decomposition-treatment apparatus in the preceding site is sealed to be liquid-tight with the stored liquid kept contained therein, demounted from the main apparatus, and transported to the next site. Otherwise the entire of the decomposition apparatus may be transported to the next site.

The treatment liquid Lᵢ₋₁ taken out is transported to site Sᵢ, and is used in secondary decomposition-treatment unit 1b of decomposition-treatment apparatus 1ᵢ from the start of the operation. This makes unnecessary, in the preceding site Sᵢ₋₁, the secondary decomposition reaction treatment of the primary decomposition product remaining in secondary decomposition treatment unit 1b of decomposition-treatment unit 1ᵢ₋₁. A large amount of energy and a long time can be saved which will be required if the secondary decomposition reaction treatment is conducted for entire of the remaining primary decomposition product in the preceding site Sᵢ₋₁. Further, in the second decomposition-treatment step in apparatus 1ᵢ, time and energy can be saved since the second decomposition-treatment step need not be started in the absence of the primary decomposition product in secondary decomposition-treatment unit 1b. If the operation is started in the complete absence of the primary decomposition product in secondary decomposition-treatment unit 1b of apparatus 1ᵢ, the decomposition of the primary decomposition product should be started after the concentration of the primary decomposition product such as halogenated acetic acid formed by decomposition of the pollutant like trichloroethylene has reached a prescribed level. This causes waste of time for the waiting.

According to the present invention, the primary decomposition product produced by a pollutant decomposition-treatment step and remaining undecomposed in the secondary decomposition step in one site need not be entirely decomposed at that site, whereby time and energy therefore are saved; and further by using the remaining primary decomposition product in another site, the waiting time in the decomposition of the primary decomposition product is saved. Therefore, the decomposition can be conducted effectively in a short time.

After completion of the treatment in site Sᵢ, the treatment liquid Lᵢ containing the primary decomposition product is transported from site Sᵢ to next site Sᵢ₊₁, similarly as the transport from Sᵢ₋₁ to Sᵢ, and is introduced into secondary decomposition-treatment unit 1b of apparatus 1ₙ₊₁ for the treatment. When the treatment in Sᵢ₊₁ has been completed, the treatment liquid Lᵢ₊₁ is remaining in the reservoir of apparatus 1ᵢ₊₁. This process is allowed proceed successively as shown in Fig. 1.

In other words, in a preceding site, the operation is conducted at a high concentration for the highest decomposition efficiency and the decomposition product is not entirely treated but partly kept untreated, and the untreated remaining decomposition product is transported to a next site. In the next site, the decomposition product is subjected to decomposition at a high concentration for the highest efficiency from the start of the operation. Such a treatment system improves the treatment efficiency as a whole.

In such a manner, according to the present invention, the solution containing a primary decomposition product formed at a site is transported to another site to be decomposed further, whereby the additional operation can be omitted at the respective sites and the decomposition treatment can be conducted efficiently in a short time.

Example of the present invention is described below. In Example below, the decomposition of the primary decomposition product is continued until completion of decontamination treatment of soil. However, with progress of the soil decontamination with lapse of time, the amount of the sucked pollutant decreases gradually toward the end of the soil decontamination treatment, and the concentration of the soil-pollutant in the pollutant-containing air decreases, resulting in decrease of the produced amount of the primary decomposition product. Therefore, in the final stage of the soil decontamination treatment, the secondary decomposition reaction treatment of the primary decomposition product may be interrupted, and the cycling liquid at a high concentration may be recovered and brought to the next soil remediation site.

Accordingly, the last stage of the primary decomposition-treatment step and that of the secondary decomposition-treatment step need not be finished simultaneously. The secondary decomposition-treatment step is preferably stopped before the last stage of the primary decomposition-treatment step.

Thus the secondary decomposition-treatment step is discontinued in the final stage where the primary decomposition product is produced in a very low rate. Thereby the concentration of the primary decomposition product in the liquid transported to another treatment site is not decreased unnecessarily, and in the next site, the decomposition of the primary decomposition product at a high concentration can be conducted at a high efficiency after transport to the site.

### <EXAMPLE>

Decomposition-treatment apparatus 1 shown in Fig. 2 was installed in site S₁. From soil polluted by organic chlorine compounds, the pollutants were sucked by means of a vacuum sucking pump, and the pollutant-containing gas was introduced into a reaction vessel at a rate of 1 m³/min (residence time: 30 seconds). The pollutant and the concentration thereof in the pollutant-containing gas were: trichloroethylene: 5 to 20 ppmV, and tetrachloroethylene: 5 to 30 ppmV.

Chlorine was fed from a chlorine cylinder to keep the chlorine concentration in the reaction vessel at 50 ppmV.

In this Example, the pollutant-containing gas was irradiated from outside the reaction vessel with 16 commercial black-light fluorescent lamps (Toshiba; FL40S BLB) not emitting light with wavelength of 300 nm or shorter as the light irradiating means.

The side wall of the reaction vessel is formed from a fluoro-plastic film, and had been confirmed to transmit the light with wavelength of not less than 300 nm.

In scrubber 4 comprised in secondary decomposition-treatment unit 1b, about 70 liters of city water was stored and was circulated by pump 9.

The primary decomposition product-containing gas was continuously introduced from the reaction vessel to the scrubber. The halogenated acetic acid, the primary decomposition product, was absorbed by the circulating liquid phase in packed bed 14 comprised of a packing.

The absorbed halogenated acetic acid was decomposed by electrolysis by application of electric current of 15 A at 3.0 V to electrodes provided in reservoir 10, by adjusting the electric current in comparison with the state of a larger electric current.

After start of operation of apparatus 1, the concentrations of trichloroethylene and tetrachloroethylene in the primary decomposition product-containing gas discharged from the reaction vessel were monitored by sampling periodically with a gas-tight syringe and determining the compounds with a gas chromatography apparatus (GC-14B (with an FID detector), manufactured by Shimadzu Corp.), column: DB-624, produced by J & W Co.). The both compounds were not detected throughout the operation.

After 5 months of the operation, the concentration of the halogenated acetic acid in the stored liquid was maintained at about 0.6%. Little amount of the pollutant-containing gas was detected in the gas sucked from the soil. This showed the completion of the soil decontamination. Thus the operation in this site was finished.

The stored liquid remaining in scrubber 4 was taken out.

Subsequently, decomposition-treatment apparatus 1 which was the same as that employed in the preceding site S₁ was installed at site S₂ having another polluted soil 5 polluted with organic chlorine compounds. From the polluted soil, the pollutant was sucked by means of a vacuum sucking pump, and the pollutant-containing gas was introduced into a reaction vessel at a rate of 1 m³/min (residence time: 30 seconds). The pollutant and the concentration thereof in the pollutant-containing gas were: trichloroethylene: 30 to 50 ppmV, and tetrachloroethylene: 20 to 40 ppmV.

Chlorine was fed from a chlorine cylinder to keep the chlorine concentration in the reaction vessel at 50 ppmV.

The pollutant-containing gas was irradiated from outside the reaction vessel with 16 commercial black-light fluorescent lamps (Toshiba; FL40S BLB).

Into scrubber 4, was introduced the stored liquid taken out from apparatus 1 installed at site S₁ containing halogenated acetic acid at a concentration of 0.6%, and city water was filled thereto to the volume of about 70 liters. This solution was circulated in the scrubber by pump 9.

The primary decomposition product-containing gas was continuously introduced from the reaction vessel into the scrubber, and the electrolysis was conducted in the same manner as conducted at site S₁. The soil was decontaminated without a problem, and the primary decomposition product was steadily decomposed.

After start of operation of apparatus 2, the concentrations of trichloroethylene and tetrachloroethylene in the primary decomposition product-containing gas discharged from the reaction vessel were monitored by sampling periodically with a gas-tight syringe and determining the compounds with a gas chromatography apparatus (GC-14B (with an FID detector), manufactured by Shimadzu Corp.), column: DB-624, produced by J & W Co.). The both compounds were not detected throughout the operation.

After 6 months of the operation, the concentration of the halogenated acetic acid in the storage liquid was found to be maintained at about 0.7%. Little amount of the pollutant-containing gas was detected in the gas sucked from the soil, which showed the completion of the soil decontamination. Thus the operation in this site was finished.

## Claims

1. A process for decomposing a decomposition-object comprising steps of decomposing a decomposition-object collected from a first area, interrupting the decomposing step, transporting to a second area the decomposition-object remaining to be decomposed after the interrupting step, and decomposing the transported decomposition-object together with a decomposition-object collected from the second area,
wherein the first decomposition-object collected from the first area and the second decomposition-object collected from the second area are the same substance.

2. The process for decomposing a decomposition-object according to claim 1, wherein the decomposition-object is decomposed in a state contained in a liquid.

3. The process for decomposing a decomposition-object according to claim 1, wherein the decomposition-object remaining to be decomposed is held in a container in the transporting step.

4. The process for decomposing a decomposition-object according to claim 1, wherein the areas mean areas polluted with a pollutant, and the decomposition-object is a decomposition product derived by decomposing the pollutant collected from the polluted area.

5. The process for decomposing a decomposition-object according to claim 4, wherein the step of interrupting the decomposition is conducted before the completion of the step of decomposing the pollutant.

6. The process for decomposing a decomposition-object according to claim 4, wherein the pollutant is an organic chlorine compound, and the decomposition product is a halogenated acetic acid.

7. The apparatus for decomposing a decomposition-object, comprising:
a receiving means for receiving an undecomposed decomposition-object transported from a first area to a second area and
a decomposing means for decomposing in the second area the transported decomposition-object together with a decomposition-object collected from the second area,
wherein the transported decomposition-object and the decomposition-object collected from the second area are the same substance.
